(19) Europäisches Patentamt
European Patent Office
Office européen des brevets

(11) Veröffentlichungsnummer: **0 295 281 B1**

(12)
# EUROPÄISCHE PATENTSCHRIFT

(45) Veröffentlichungstag der Patentschrift:
11.09.91 Patentblatt 91/37

(51) Int. Cl.$^5$: **F01L 1/04**, B23P 19/04

(21) Anmeldenummer: 88900451.1

(22) Anmeldetag: 19.12.87

(86) Internationale Anmeldenummer:
PCT/DE87/00602

(87) Internationale Veröffentlichungsnummer:
WO 88/04719 30.06.88 Gazette 88/14

(54) **MONTAGEVORRICHTUNG FÜR GEBAUTE NOCKENWELLEN UND VERFAHREN ZUR MONTAGE.**

(30) Priorität: 20.12.86 DE 3643803

(43) Veröffentlichungstag der Anmeldung:
21.12.88 Patentblatt 88/51

(45) Bekanntmachung des Hinweises auf die
Patenterteilung:
11.09.91 Patentblatt 91/37

(84) Benannte Vertragsstaaten:
BE CH DE FR GB IT LI NL SE

(56) Entgegenhaltungen:
EP-A- 0 230 731
DE-A- 3 616 901
GB-A- 2 050 207
US-A- 4 597 365

(73) Patentinhaber: Emitec Gesellschaft für
Emissionstechnologie mbH
Hauptstrasse 150
W-5204 Lohmar 1 (DE)

(72) Erfinder: RIEMSCHEID, Helmut
Heiligenstock 53
W-5204 Wahlscheid (DE)
Erfinder: WEISS, Karl
Kastanienweg 24
W-5205 St. Augustin 1 (DE)
Erfinder: FRIELINGSDORF, Herbert
Südstrasse 50 a
W-5204 Lohmar (DE)
Erfinder: SCHWARZ, Engelbert
Hardtstrasse 13
W-5207 Ruppichteroth (DE)
Erfinder: GREWE, Heribert
Auf dem Heidgen 42
W-5063 Overath (DE)

(74) Vertreter: Neumann, Ernst Dieter, Dipl.-Ing. et
al
HARWARDT NEUMANN PATENTANWÄLTE
Scheerengasse 2 Postfach 1455
W-5200 Siegburg (DE)

## Beschreibung

Die Erfindung betrifft eine Montagevorrichtung für gebaute Nockenwellen mit einer Haltevorrichtung zum axialen Fixieren von einzelnen Elementen wie Nockenscheiben, Lagerringen, Zahnoder Kegelrädern und einer Druckmittelsonde zum abschnittsweise hydraulischen Aufweiten einer Hohlwelle, wobei die Elemente und die Hohlwelle kraftschlüssig miteinander verbunden werden, wobei für die Haltevorrichtung einzelne Fixierscheiben vorgesehen sind, die jeweils eine zentrale Öffnung zur Aufnahme eines jeweiligen Elements und einen äußeren Lagersitz zur Aufnahme in jeweils einer Lagerstelle der Haltevorrichtung aufweisen, und wobei die Fixierscheiben einen zumindest teilringförmigen äußeren Lagersitz zur Aufnahme in einer Lagerstelle aufweisen.

Aus der GB-A-2050207 ist eine Haltevorrichtung bekannt, die Fixierscheiben zur Aufnahme von einzelnen Elementen aufweist. Da diese kreisscheibenförmigen Fixierscheiben horizontal, d.h. alle in einer bestimmten gemeinsamen Ebene geteilt sein sollen und in ein teilbares Gesenk einlegbar sein sollen, ist eine derartige Vorrichtung für nur eine spezifische Nockenwelle individuell angepaßt. In welcher Weise die Fixierscheiben mit dem Gesenk verbunden sind, ist nicht offenbart. Eine Änderung der Winkellage der Nocken bedingt die Verwendung eines anderen Satzes von Fixierscheiben.

Aus der US-A-4597365 ist eine Vorrichtung der genannten Art, bei der einzelne Fixierscheiben zur Aufnahme einzelner Elemente eine äußere Rechteckform haben und in eine Art Gesenk eingebaut sind. Aufnahmeöffnungen für die Elemente sind einseitig nach oben offen und werden durch am Gesenkoberteil befestigte in die Öffnungen eingreifende Ansätze verschlossen. Auch diese Vorrichtung ist nur für eine spezifische Welle individuell angepaßt. Die einzelnen Fixierscheiben sind über Klemmleisten mit dem Gesenkunterteil verschraubt, so daß ein schneller regelmäßiger Austausch nicht möglich ist. Wie bei der zuvor beschriebenen Vorrichtung müssen beispielsweise bei Änderung der Winkellage der Nocken zueinander die Fixierscheiben ausgewechselt werden.

Eine Vorrichtung der eingangs genannten Art ist in der DE-A-3530600 vorbeschrieben, bei der die einzelnen Elemente in einer Vorrichtung winkelgerecht und axial fixiert gehalten sind und eine Sonde mit einer entsprechenden Anzahl von zugeordneten Aufweitabschnitten insgesamt in die Hohlwelle eingeschoben wird. Nähere Einzelheiten der Ausgestaltung der Vorrichtung sind der Anmeldung nicht zu entnehmen, im übrigen sind Sonden mit mehreren Aufweitbereichen nicht ohne Probleme darzustellen.

Der vorliegenden Erfindung liegt die Aufgabe zugrunde, eine Vorrichtung der eingangs genannten Art bereitzustellen, die für eine serienmäßige Fertigung der Nockenwellen geeignet ist. Dabei soll es möglich sein, eine solche Vorrichtung in einfacher Weise an verschiedene Nockenwellentypen ohne großen Kostenaufwand anzupassen.

Hierbei sollen insbesondere geänderte Nocken bzw. Zahnradformen, geänderte Winkellagen der Nocken sowie geänderte Nockenabstände möglich sein. Dabei soll es unerheblich sein, ob Druckmittelsonden mit nur einem Aufweitabschnitt oder mit mehreren Aufweitabschnitten zum Einsatz kommen.

Die Lösung besteht darin, daß die Fixierscheiben jeweils drehbar in einer Lagerstelle gehalten sind und Fixiermittel zur Festlegung der Winkellage der Fixierscheiben in der Lagerstelle vorgesehen sind. Eine derartige Montagevorrichtung bietet die Möglichkeit, die einzelnen Elemente zusammen mit den sie aufnehmenden Fixierscheiben schnell und in vorbestimmter Position in die Haltevorrichtung einzubringen und nach dem Fertigstellen der Nockenwelle diese zusammen mit den Fixierscheiben der Haltevorrichtung insbesondere automatisch zu entnehmen.

Das Beschicken der Fixierscheiben mit den einzelnen Elementen und das Herauslösen der fertiggestellten Welle aus den Fixierscheiben kann dabei in günstiger Weise unter Verwendung von zwei Sätzen von Fixierscheiben in einer zweiten Vorrichtung erfolgen, wobei jeweils zeitgleich mit dem Verbinden der Elemente mit der Welle in der Montagevorrichtung daß Beschicken und Entnehmen zur Zeiterspamis in der zweiten Vorrichtung erfolgt.

Von Ausnahmefällen, wie zum Beispiel Nockenwellen für Einzylindermaschinen abgesehen, bei denen ein axiales Entnehmen der Nockenwelle aus den Fixierscheiben möglich erscheinen, ist es in der Regel besonders günstig, wenn die Fixierscheiben mittig geteilt sind, um das Beschicken und Entnehmen in der zweiten, nicht näher dargestellten Vorrichtung zu ermöglichen bzw. zu erleichtern. Eine andere günstige Möglichkeit besteht darin, daß die Fixierscheiben an sich geschlossen sind, aber eine mittig geteilte Spannvorrichtung aufweisen, wobei das Beschicken in der Montagevorrichtung in einer herausgezogenen Position der Fixierscheiben erfolgen kann.

Weiterhin ist es günstig, wenn die Fixierscheiben außen einen ringförmigen oder teilringförmigen Lagersitz zur drehbaren Aufnahme in einer Lagerstelle haben, um die Winkellage der Elemente in einfacher Weise ohne größere Änderungen an der Haltevorrichtung ändern zu können. Hierbei erscheint es als besonders vorteilhaft, wenn die Fixierscheiben außen jeweils mit einer radialen oder mehreren Bohrungen versehen sind, in die zur Festlegung der Winkellage ein Fixierstift in der jeweiligen Lagerstelle eingreifen kann. Es können jedoch auch mehrere umfangsverteilte Klemmelemente vorgesehen sein, um die Winkellage der Elemente dauerhaft einzustellen.

Es ist erkennbar, daß ein Austausch der Fixierscheiben bei im übrigen unveränderter Gesamtvorrichtung eine leichte Anpassung an geänderte Nockenformen möglich macht, wobei die sichere Abstützung der Fixierscheiben in der Haltevorrichtung jeweils in unveränderter Form stattfindet. Durch den äußeren runden Lagersitz ist die Möglichkeit gegeben, die Winkellage durch Verdrehen der Fixierscheibe problemlos einzustellen, um beispielsweise bei grundsätzlich unveränderter Nockenwelle eines bestimmten Motortyps die Steuerzeiten der Nockenwelle problemlos zu verändern. Eine formgetreue Einpassung der Elemente in die Fixierscheiben ist erforderlich, um die gewünschte Winkellage genau einzustellen.

Eine vergrößerte Anpassungsfähigkeit bieten Fixierscheiben mit einer teilbaren Spannvorrichtung, deren gegeneinander verschiebbare und in ihrer Endposition fixierbare Spannbacken Aufnahmeprismen und/oder Aufnahmeschalen aufweisen. Derartige Spannbacken können Nocken verschiedener Größe aufnehmen, nur bei extremen Größenunterschieden ist ein Austauschen oder Verändern der Spannbacken erforderlich. Mit dem Justieren der pneumatisch betätigbaren Spannbacken läßt sich die zentrische Lage der Nockenbohrung einstellen, die Winkellage des Nockens wird durch Verdrehen der Fixierscheibe bewirkt, wie oben beschrieben.

In besonders günstiger Weiterbildung der Erfindung sind die Lagerstellen in einzelnen, insbesondere längsverschieblichen Lagergehäusen gehalten, so daß auch eine Anpassung der Vorrichtung an die Herstellung von Nockenwellen mit völlig unterschiedlichen Nockenabständen oder Nockenzahlen erfolgen kann. Dies bedeutet, daß auf ein und derselben Vorrichtung nacheinander Serien von Nockenwellen vollkommen unterschiedlicher Motortypen hergestellt werden können, die sich beispielsweise sogar in der Zylinderzahl oder der Zahl der Ventile pro Zylinder unterscheiden können.

In einer dazu gleichwertigen Weiterbildung der Erfindung sind die Lagerstellen in einem einzigen Lagergehäuse ausgebildet, das insbesondere nach Art eines Gesenks teilbar ist. Dies wird die bevorzugte Form der Vorrichtung ür die Herstellung von größeren Serien von Nockenwellen sein. Mit einer derartigen Form der Vorrichtung ist der Vorteil geringerer Fehlermöglichkeit verbunden, da die Gefahr eines radialen Versatzes der einzelnen Lagerstellen im Laufe der Benutzung ausgeschaltet ist.

Eine günstige Ausgestaltung für mittig geteilte Fixierscheiben geht dahin, das oder die Lagergehäuse mittig, insbesondere horizontal, teilbar zu machen, so daß auf einfache Weise ein Auswechseln der Fixierscheiben bzw. der Hohlwelle erfolgen kann. Eine bevorzugte Weiterbildung für ungeteilte Fixierscheiben mit mittig geteilter Spannvorrichtung ist darin zu sehen, die Lagergehäuse auf entsprechenden Führungen aus ihrer Gesamtheit einzeln horizontal herausziehbar anzuordnen, d.h. nach Art von Schubladen in einem Schrank, die einzeln automatisch nachladbar sind.

Eine Längsführung für die axial verschieblichen Einzelgehäuse besteht in besonders günstiger Weise aus parallelen Stangen, die die im wesentlichen scheibenförmigen Lagergehäuse durchsetzen.

Die Abstände der längsverschiebbaren Einzelgehäuse können mit üblichen Meßwerkzeugen bestimmt und mit besonderen Spannmittel fixiert werden. Nach einer besonders günstigen Ausgestaltung ist jedoch für jeden Nockenwellentyp an der Vorrichtung eine austauschbare Leiste vorzusehen, die nach der Art einer Lehre als Raster für den gewünschten Abstand der Lagergehäuse und damit auch der auf der Welle festzulegende Elemente sorgt. Diese Leiste ist in paralleler Anordnung zur Längsrichtung der Hohlwelle auswechselbar zu befestigen.

Zur Aufnahme einer entsprechenden Hohlwelle sind in günstiger Ausgestaltung ein oder zwei Endaufnahmelager vorzusehen, die bevorzugt auf den gleichen Längsführungen wie die Lagergehäuse längsverschieblich angeordnet sind und deren mit Längsanschlägen versehenen Aufnahmeöffnungen in genau koaxialer Anordnung zu den Lagerstellen gehalten werden.

Entsprechend der vorgesehenen Funktionsweise ist die Druckmittelsonde mit einer längsverfahrbaren Sondenhalterung zu versehen, die ein Ein- und Ausfahren der Druckmittelsonde in die eingespannte Hohlwelle ermöglicht. Soweit eine Sonde mit mehreren Aufweitabschnitten vorgesehen ist, die die Fertigstellung der Nockenwelle in einem einzigen Aufweitvorgang ermöglicht, ist die Sonde insgesamt austauschbar auszuführen, wobei eine Sonde für verschiedene Nockenwellen des gleichen Grundmotors einsetzbar ist. Bei einer Sonde, die nur einen Aufweitabschnitt hat und mit der die Nockenwelle in mehreren Aufweitvorgängen fertiggestellt werden kann, ist an der Sondenhalterung eine auswechselbare Skala vorzusehen, deren Markierungsabstände mit den eingestellten Abständen der Lagerstellen übereinstimmen.

Druckmittelsonden der hier beschriebenen Art sind als solche für den Anwendungszweck der Fixierung von Wärmetauscherröhren in Rohrböden bekannt. Die Sondenhalterung besteht dabei im wesentlichen aus einem Handgriff, mit dem die Druckmittelsonde "freihand" in das Rohr eingeführt wird. Bei diesem Vorgang kann es zu Winkelfehlern kommen, durch die die Abdichtung beim Aufweiten beeinträchtigt wird und gegebenenfalls die aufgeweiteten Abschnitte nicht exakt zentriert sind. Es ist hierbei zu berücksichtigen, daß die Hohl-

3

welle Ungenauigkeiten im Innendurchmesser aufweisen kann, die zu unterschiedlichen Dichtungsspalten über den Umfang führen kann. Eine weitergehende Aufgabe ist es daher, ein Verfahren bereitzustellen, wonach die Zentrierung der Sonde innerhalb des Rohrinnendurchmessers verbessert wird. Die Lösung hierfür besteht in einem Verfahren, nach dem beim Aufweiten die Sonde einerseits und die Hohlwelle und/oder die Elemente andererseits relativ zueinander in sich parallel radial beweglich gehalten sind. Auf diese Weise wird eine Selbstzentrierung der Sonde im Rohr erzielt, so daß sich radiale Verspannungen und Verwerfungen der Hohlwelle durch die Aufweitvorgänge auf ein Minimum reduzieren. Das erfindungsgemäße Verfahren läßt sich mittels eine radialen Spiels der Fixierscheiben in den Lagerstellen oder mittels einer federnd nachgiebigen Halterung der Elemente zwischen den Lagerstellen durchführen.

Als Mittel für die Durchführung des Verfahrens können beispielsweise auch elastische Lagerelemente der Sondenhalterung auf der zugeordneten Längsführung oder Endlager für die Hohlwelle mit radialem Spiel vorgesehen sein.

Zwei Ausführungsbeispiele der erfindungsgemässen Vorrichtung lassen sich den beigefügten Zeichnungen entnehmen.

Fig. 1a    zeigt eine Vorrichtung in einer ersten Ausführung in Gesamtansicht von der Seite
Fig. 1b    zeigt eine Vorrichtung nach Fig. 1a in Teilansicht als Draufsicht
Fig. 1c    zeigt eine Vorrichtung nach Fig. 1a und 1b in axialer Ansicht mit einer Fixierscheibe im Teilschnitt
Fig. 2a    zeigt eine Vorrichtung in einer zweiten Ausführung in Gesamtansicht von der Seite
Fig. 2b    zeigt eine Vorrichtung nach Fig. 2a in um 90° veränderter Teilansicht
Fig. 2c    zeigt eine Vorrichtung nach Fig. 2a und 2b in einem Querschnitt mit einer Fixierscheibe in axialer Ansicht.

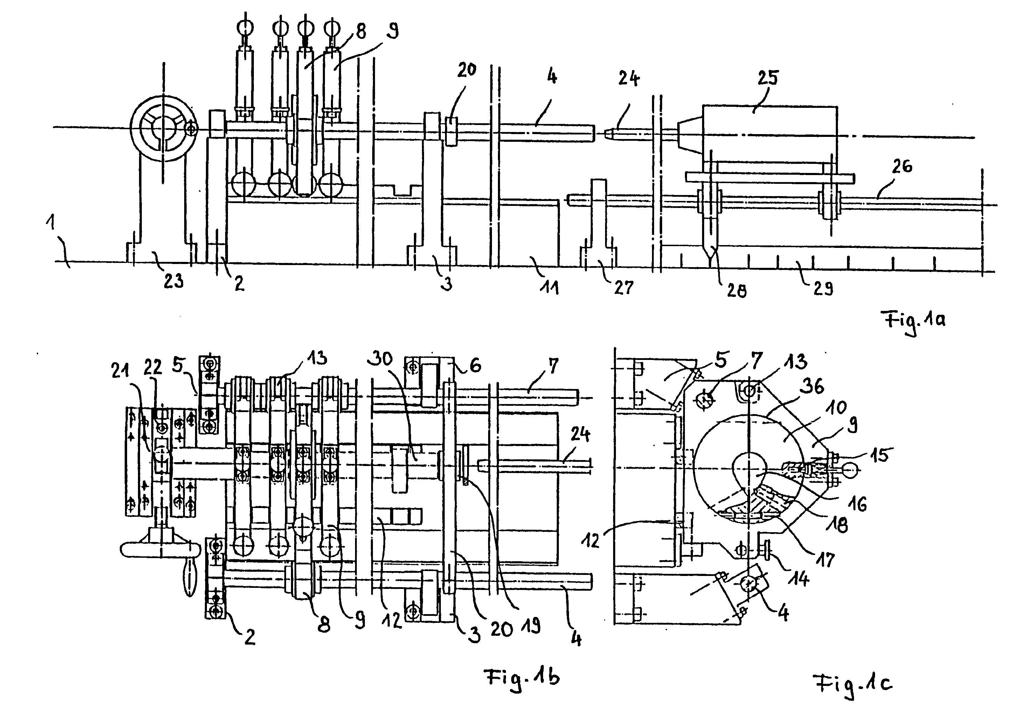

In den Figuren 1a und 1b sind auf einem Maschinenfundament 1 zwei erste Lagerbocke 2, 3 zur Aufnahme einer ersten Führungsstange 4 und zwei zweite Lagerböcke 5, 6 zur Aufnahme einer zweiten Führungsstange 7 erkennbar. Auf der ersten Führungsstange 4 lagert schwenkbar ein teilbares Gehäuse 8 zur Aufnahme eines ersten Elementes, z.B. eines Lagersitzes ; auf der zweiten Führungsstange 7 lagern schwenkbar mehrere teilbare Gehäuse 9 zur Aufnahme jeweils einer Fixierscheibe 10, von der Elemente einer zweiten Art aufgenommen werden können. Die um die jeweilige Führungsstange schwenkbaren Gehäuse stützen sich im übrigen auf einer Längsführung 11 ab. Ihr Abstand zueinander wird durch eine rasterartige Führungsleiste 12 vorgegeben. Die durch die Leiste 12 axial fixierten Gehäuse 9 sind jeweils horizontal geteilt und um eine Achse 13 aufklappbar gelagert, wobei mittels einer Schraube 14 eine Verspannung der Gehäusehälften möglich ist. Zur Aufnahme der Hohlwelle ist ein erstes Endaufnahmelager 19 vorgesehen, das in einer auf beiden Fuhrungsstangen 4, 7 geführten Wange 20 gehalten ist, sowie ein zweites Endaufnahmelager 21, das in einem zumindest in einer Richtung verstellbaren, vorzugsweise in zwei zueinander senkrechten Richtungen verstellbaren Führungschlitten 22 gehalten ist, der in einem separaten Spindelstock 23 verstellbar ist.

In koaxialer Anordnung zu der gestrichelt dargestellten Hohlwelle 30 ist eine Druckmittelsonde 24 angeordnet, die in einem Sondenhalter 25 gehalten ist. Dieser ist auf einer Längsführung 26 axial verschiebbar, die zumindest in einem Lagerbock 27 gehalten ist. An der Sondenhalterung ist ein Zeiger 28 angeordnet, der gegenüber einer mit dem Maschinenfundament verbundenen Skala 29 die axiale Position der Druckmittelsonde ablesbar macht. Die Sondenhalterung ist zumindest um die Führungsstange 26 schwenkbar, vorzugsweise in allen Richtungen nachgebend parallel verschiebbar angeordnet.

Nach Fig. 1c ist im Gehäuse 9 ein radial herausziehbarer Fixierstift 15 vorgesehen, der die Winkellage der Fixierscheibe 10 festlegt, die grundsatzlich verdrehbar in der ringförmigen Lagersteller 36 gehalten ist. Die Fixierscheibe 10 ist ihrerseits in Richtung der längeren Achse der zentralen Nockenöffnung 16 geteilt und mittels Spannschrauben 17 verschraubbar. Justierschrauben 18 innerhalb der Fixierscheibe dienen der Justierung und Fixierung der einzuführenden Nocken.

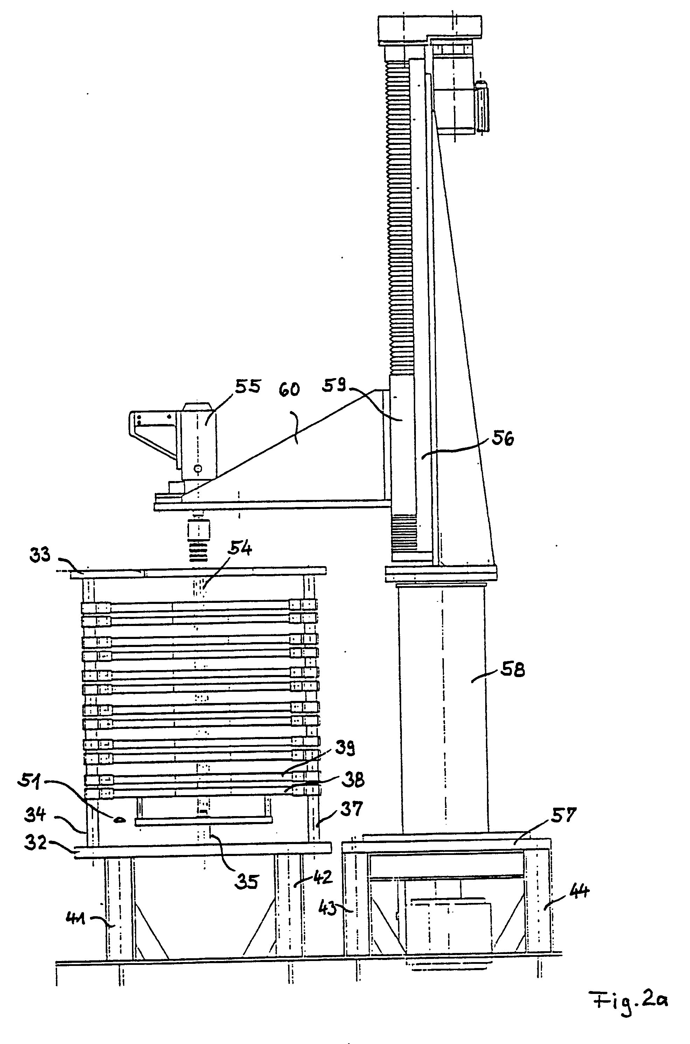

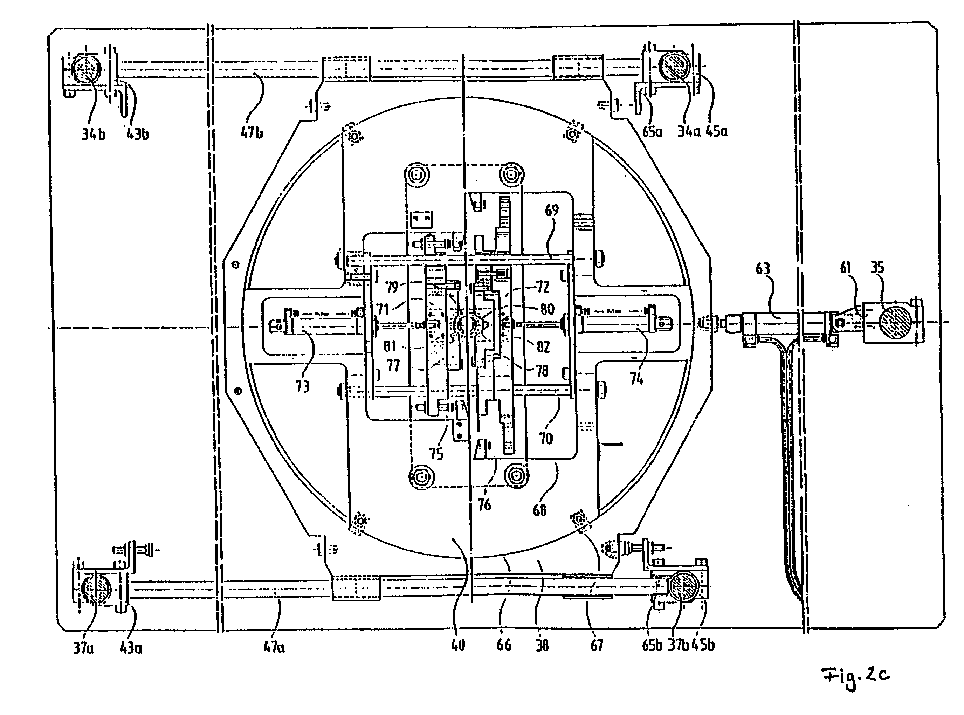

In Fig. 2a ist eine Montagevorrichtung, bei der auf einem gemeinsamen Maschinenfundament 31 ein erstes Aggregat für die Aufnahme von mehreren Gehäusen 38, 39 und ein zweites Aggregat zur Aufnahme eines Sondenhalters 55 aufgebaut sind. Auf dem Maschinenelement 31 ist auf Ständern 41, 42 eine horizontale Grundplatte 32 aufgebaut, auf der parallele Führungsstangen 34, 37 stehen, die über eine weitere Platte 33 miteinander verbunden werden. Die Führungsstangen 34, 37 dienen, wie noch im einzelnen näher beschrieben wird, der Halterung der einzelnen Gehäuse 38, 39, die auf diesen im Abstand der festzulegenen Nockenelementen paarweise für einzelne Zylindereinheiten angeordnet sind. Eine weitere Führungsstange 35 mit anderer Aufgabe ist teilweise verdeckt erkennbar. Unterhalb des unteren Gehäuses ist ein Endaufnahmelager 51 für das Ende der Hohlwelle 30 angehängt, die mit gestrichelten Linien dargestellt ist. Auf zwei weiteren Ständern 43, 44 ist auf einer Grundplatte 57 und einer Säule 58 eine Längsführung 56 aufgestellt, auf der ein Schlitten 59 mit einem Auslegerarm 60 motorisch längsverstellbar geführt ist, in den der Sondenhalter 55 eingesetzt ist.

Der Verschiebebereich des Schlittens 59 ist so groß, daß die Sonde 54 vollständig aus den Gehäusen 38, 39 und der oberen Grundplatte 33 herausgefahren werden kann.

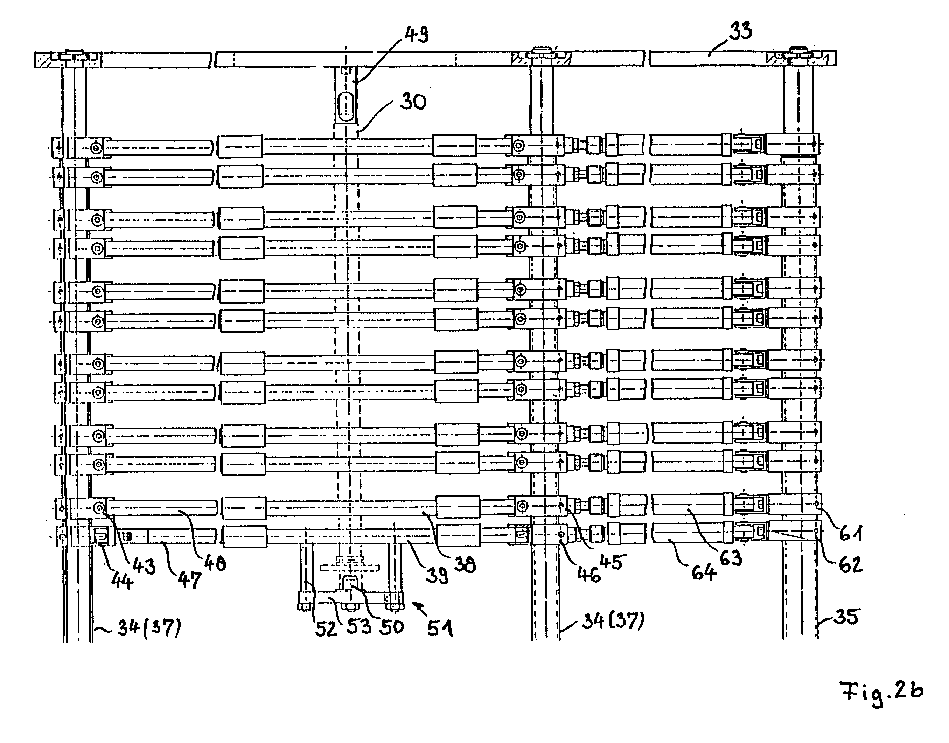

In Fig. 2b sind die Fuhrungsstangen 34, 37 für die Gehause 38, 39 erkennbar sowie die weitere Führungsstange 35, auf der Hydraulikzylinder 43, 44 paarweise in entsprechender Zuordnung zu den Gehäusen angeordnet sind. Die Führungsstangen 34, 35, 37 ruhen auf der nicht dargestellten Grundplatte 32 und sind über die gemeinsame Deckplatte 33 miteinander an ihren Enden verbunden. Am unteren Gehäuse 39 ist ein Endaufnahmelager 51 angeordnet, das zwei Bolzen 52, eine Grundplatte 53 und einen Zentrierstift 50 umfaßt. An der Deckplatte 33 ist ein Führungsstuck 49 für die Sonde vorgesehen. Mit gestrichelten Linien ist eine Hohlwelle 30 dargestellt. Die Gehäuse 38, 39 sind nicht unmittelbar auf den Führungsstangen 34, 37 gehalten, sondern mittelbar über Klemmstücke 43, 44, 45, 46, die über Führungsstangen 47, 48 miteinander verbunden sind. Auf diesen Fuhrungsstangen, die verkürzt dargestellt sind, sind die Gehäuse 38, 39 zumindest um die halbe Gehäuselänge, vorzugsweise um die ganze Gehäuselänge von der gezeigten Position aus nach links axial verschiebbar, wobei die Verschiebung mittels der verkürzt dargestellten Pneumatikzylinder 43, 44 erfolgt, die ebenfalls mit Klemmstücken 61, 62 höhenverstellbar gehalten sind.

In Fig. 2c ist ein einzelnes Gehäuse 38 erkennbar, das auf horizontalen Führungsstangen 47 verschiebbar ist, wobei diese Führungsstangen 47 in Klemmstücken 43, 45 gehalten sind, die ihrerseits auf den Führungsstangen 34, 37 verstellbar sind. Die Verschiebung des Gehäuses 38 auf den Fuhrungsstangen 47 erfolgt mittels des Pneumatikzylinders 63, der verkürzt dargestellt ist und an einem Klemmstück 61 gelenkig angreift, das seinerseits auf der Führungsstange 35 höhenverstellbar ist. An den Klemmstücken 45 sind justierbare Anschläge 65 für die Einstellung des Gehäuses 38 vorgesehen. Im Gehäuse ist eine ringförmige Lagerstelle 66 vorgesehen, in die die Fixierscheibe 40 verdrehbar eingesetzt ist, wobei Klemmelemente 67 ihre Stellung fixieren können. Die Fixierscheibe 40 hat vier einzelne Führungsabschnitte, da sie nicht als Vollscheibe ausgebildet ist. In einer inneren Ausnehmung 68 sind parallele Führungsstangen 69, 70 vorgesehen, auf denen sich gegenüberliegende Spannbacken 71, 72 gegeneinander mittels Pneumatikzylindem 73, 74 verschiebbar angeordnet sind. Die Endpositionen werden durch justierbare Anschlaganordnungen 75, 76 bestimmt. Die Spannbacken weisen austauschbare Formteile 77, 78 auf, die im gezeigten Beispiel eine Aufnahmeschale 81 und ein Aufnahmeprisma 82 bilden. Unter die Spannbacken geschraubte Haltekragen 79 mit gegenüber der Nockenbohrung größerer Durchgangsbohrung bilden eine Auflage für den einzusetzenden Nocken 80. Die Formteile 77, 78 sind gegenüber den Spannbacken 71, 72 quer justierbar, während die Justierung ihrer Endlage in Vorschubrichtung durch die Anschlaganordnungen 75, 76 erfolgt. Auf diese Weise ist die genaue Zentrierung der Nockenbohrung möglich, während die Winkellage durch Verdrehen und Justieren der relativ großen Fixierscheibe 40 im Gehäuse 38 erfolgt, wobei auf Teile von Winkelgraden genau eingestellt werden kann. Die gezeigten Pneumatikzylinder 73, 74 sind doppeltwirksame Zylinder. Zum Entfernen der fertiggestellten Nockenwelle sind die Spannbacken 71, 72 voll zurückgefahren, um die Nocken 80 unterschiedlicher Winkellage ohne Behinderung gemeinsam mit der Hohlwelle 30 axial herausziehen zu können, während das Einlegen von Nocken in einer zusammengeschobenen aber druckentlasteten Position der Spannbacken 71, 72 erfolgen kann.

# Montagevorrichtung für gebaute Nockenwellen und Verfahren zur Montage

Bezugszeichenliste

| | | |
|---|---|---|
| 1 | | Maschinenfundament |
| 2, | 3 | Lagerbock |
| 4 | | Führungsstange |
| 5, | 6 | Lagerbock |
| 7 | | Führungsstange |
| 8, | 9 | Gehäuse |
| 10 | | Fixierscheibe |
| 11 | | Längsführung |
| 12 | | Führungsleiste |
| 13 | | Achse (Gehäuse 9) |
| 14 | | Schraube |
| 15 | | Fixierstift |
| 16 | | Nockenöffnung |
| 17 | | Spannschraube |
| 18 | | Justierschraube |
| 19 | | Endaufnahmelager |
| 20 | | Wange |
| 21 | | Endaufnahmelager |
| 22 | | Führungsschlitten |
| 23 | | Spindelstock |
| 24 | | Druckmittelsonde |
| 25 | | Sondenhalter |
| 26 | | Längsführung (Sonde) |
| 27 | | Lagerbock |
| 28 | | Zeiger |
| 29 | | Skala |
| 30 | | Hohlwelle |
| 31 | | Maschinenfundament |

| 32, 33 | Grundplatte |
| 34 | Führungsstange |
| 35 | Führungsstange |
| 36 | Lagerstelle |
| 37 | Führungsstange |
| 38, 39 | Gehäuse |
| 40 | Fixierscheibe |
| 41, 42 | Ständer |
| 43, 44 | Klemmstück |
| 45, 46 | Klemmstück |
| 47, 48 | Führungsstange |
| 49 | Führungsstück |
| 50 | Zentrierstift |
| 51 | Endaufnahmelager |
| 52 | Bolzen |
| 53 | Grundplatte |
| 54 | Druckmittelsonde |
| 55 | Sondenhalter |
| 56 | Sondenführung |
| 57 | Grundplatte |
| 58 | Ständer |
| 59 | Schlitten |
| 60 | Auslegerarm |
| 61, 62 | Klemmstück |
| 63, 64 | Pneumatikzylinder |
| 65 | Anschläge |
| 66 | Lagerring |
| 67 | Klemmelement |
| 68 | Ausnehmung |
| 69, 70 | Führungsstange |
| 71, 72 | Spannbacke |
| 73, 74 | Pneumatikzylinder |
| 75, 76 | Anschlaganordnung |
| 77, 78 | Formteil |
| 79 | Haltekragen |
| 80 | Nocken |
| 81 | Aufnahmeschale |
| 82 | Aufnahmeprisma |

**Patentansprüche**

1. Montagevorrichtung für gebaute Nockenwellen mit einer Haltevorrichtung zum axialen Fixieren von einzelnen Elementen wie Nockenscheiben, Lagerringen, Zahnoder Kegelrädern und einer Druckmittelsonde zum abschnittsweise hydraulischen Aufweiten einer Hohlwelle, wobei die Elemente und die Hohlwelle kraftschlüssig miteinander verbunden werden, wobei für die Haltevorrichtung einzelne Fixierscheiben (10, 40) vorgesehen sind, die jeweils eine zentrale Öffnung (16, 68) zur Aufnahme eines jeweiligen Elements und einen äußeren Lagersitz zur Aufnahme in jeweils einer Lagerstelle (36, 66) der Haltevorrichtung aufweisen, und wobei die Fixierscheiben (10) einen zumindest teilringförmigen äußeren Lagersitz zur Aufnahme in einer Lagerstelle (36, 66) aufweisen, dadurch gekennzeichnet, daß die Fixierscheiben (10, 40) jeweils drehbar in einer Lagerstelle (36, 66) gehalten sind und Fixiermittel (15, 67) zur Festlegung der Winkellage der Fixierscheiben in der Lagerstelle vorgesehen sind.

2. Vorrichtung nach Anspruch 1, dadurch gekennzeichnet, daß die Fixierscheiben (10) mittig geteilt sind (Fig. 1).

3. Vorrichtung nach Anspruch 1, dadurch gekennzeichnet, daß die Fixierscheiben (40) eine mittig geteilte Spannvorrichtung (69-78) aufweisen (Fig. 2).

4. Vorrichtung nach einem der Ansprüche 1 bis 3, dadurch gekennzeichnet, daß die Fixierscheiben (10) mit jeweils zumindest einer Bohrung im äußeren Lagersitz zur Festlegung der Winkellage in der Lagerstelle (66) mittels eines Fixierstiftes (15) versehen sind.

5. Vorrichtung nach einem der Ansprüche 1 bis 3, dadurch gekennzeichnet, daß die Fixierscheiben (4) mit umfangsverteilten Klemmvorrichtungen (67) am äußeren Lagersitz zur Festlegung der Winkellage in der Lagerstelle (66) versehen sind.

6. Vorrichtung nach Anspruch 3, dadurch gekennzeichnet, daß die Spannvorrichtung (69-78) innerhalb der Fixierscheiben (40) gegeneinander verstellbare und justierbare Spannbacken (71, 72) mit Aufnahmeprismen (80) und/oder Aufnahmeschalen (79) aufweist.

7. Vorrichtung nach Anspruch 6, dadurch gekennzeichnet, daß die Aufnahmeprismen (82) und/oder Aufnahmeschalen (81) bei horizontaler Anordnung der Fixierscheibe (40) Auflagekragen (79) für einzelne Nocken aufweisen.

8. Vorrichtung nach einem der Ansprüche 1 bis 7, dadurch gekennzeichnet, daß die Spannbacken (71, 72) pneumatisch auf parallelen Führungen (69, 79) gegen Justieranschläge (75, 76) verschiebbar sind.

9. Vorrichtung nach einem der Ansprüche 1 bis 8, dadurch gekennzeichnet, daß ein gemeinsames Lagergehäuse vorgesehen ist, das sämtliche Lagerstellen aufnimmt (ohne Fig.).

10. Vorrichtung nach einem der Ansprüche 1 bis 8, dadurch gekennzeichnet, daß einzelne Lagergehäuse (8, 9 ; 38, 39) vorgesehen sind, die jeweils eine Lagerstelle (36 ; 66) aufweisen.

11. Vorrichtung nach Anspruch 10, dadurch gekennzeichnet, daß die einzelnen Lagergehäuse (8, 9 ; 38, 39) längsverschieblich in der Haltevorrichtung angeordnet sind.

12. Vorrichtung nach einem der Ansprüche 1 bis 11, dadurch gekennzeichnet, daß die Lagergehäuse (8, 9) mittig — vorzugsweise horizontal — geteilt sind und die Gehäusehälften verspannbar, insbesondere aufklappbar, miteinander verbunden sind.

13. Vorrichtung nach einem der Ansprüche 1 bis 11, dadurch gekennzeichnet, daß die Lagergehäuse (38, 39) in ihrer Ebene, d.h. senkrecht zur Achse der Hohlwelle (30), einzeln aus ihrer Gesamtheit herausziehbar angeordnet sind.

14. Vorrichtung nach Anspruch 13, dadurch gekennzeichnet, daß die Lagergehäuse (38, 39) auf einer insbesondere aus zwei Stangen (47, 48) bestehenden Parallelführung zum Herausziehen angeordnet sind.

15. Vorrichtung nach Anspruch 11 oder 14, dadurch gekennzeichnet, daß die einzelnen Lagergehäuse (8, 9 ; 38, 39) oder deren Parallelführung zum Herausziehen auf einer insbesondere aus zwei bis vier Stangen (4, 7 ; 34, 37) bestehenden Parallelführung verstellbar angeordnet sind.

16. Vorrichtung nach einem der Ansprüche 1 bis 15, dadurch gekennzeichnet, daß ein oder zwei Endaufnahmelager (19, 21 ; 51) mit zumindest einem Längsanschlag für die zentrierte Aufnahme der Hohlwelle (30) in koaxialer Anordnung zu den Lagerstellen (36, 66) vorgesehen sind.

17. Vorrichtung nach einem der Ansprüche 1 bis 16, dadurch gekennzeichnet, daß eine in Richtung der Endaufnahmelager (19, 21 ; 51) bzw. der Lagerstellen (36 ; 66) längs verfahrbare Sondenhalterung (25 ; 55) zum Ein- und Ausfahren einer Druckmittelsonde (24 ; 54) in die Hohlwelle (30) vorgesehen ist.

18. Vorrichtung nach einem der Ansprüche 1 bis 17, dadurch gekennzeichnet, daß die Sondenhalterung (25, 55) radial schwimmend gegenüber der Halterung für die Elemente und/oder der Halterung für die Hohlwelle (30) angeordnet ist, insbesondere mittels elastischer Führungsmittel in der Sondenhalterung.

## Claims

1. An assembling device for assembled camshafts, having a holding device for axially fixing individual elements such as cam discs, bearing rings, gear wheels or bevel gears, and a pressure agent mandrel for hydraulically expanding a hollow shaft in portions, with the elements and the hollow shaft being connected to each other in a force locking way, with the holding device being provided with individual fixing plates (10, 40) each comprising a central aperture (16, 68) for receiving the respective element and an outer bearing seat for being received in a bearing region (36, 66) of the holding device, and with the fixing plates (10) comprising an at least partially annular outer bearing seat for being received in a bearing region (36, 66), characterised in that the fixing plates (10, 40) are each rotatably held in a bearing region (36, 66) and that there are provided fixing means (15, 67) for fixing the angular position of the fixing plates in the bearing region.

2. A device according to claim 1, characterised in that the fixing plates (10) are centrally divided (Fig. 1).

3. A device according to claim 1, characterised in that the fixing plates (40) comprise a centrally divided tensioning device (69-78) (Fig. 2).

4. A device according to one of claims 1 to 3, characterised in that the fixing plates (10) are each provided with at least one bore in the outer bearing seat for fixing the angular position in the bearing region (66) by means of a fixing pin (15).

5. A device according to one of claims 1 to 3, characterised in that the fixing plates (40) are provided with circumferentially distributed clamping devices (67) at the outer bearing seat for fixing the angular position in the bearing region (66).

6. A device according to claim 3, characterised in that the clamping device (69-78) within the fixing plates (40) comprises mutually adjustable tensioning jaws (71, 72) with receiving prisms (80) and/or receiving cups (79).

7. A device according to claim 6, characterised in that while the fixing plate (40) is arranged horizontally, the receiving prisms (82) and/or receiving cups (81) comprise stop collars (79) for individual cams.

8. A device according to one of claims 1 to 7, characterised in that the tensioning jaws (71, 72) are pneumatically adjustable on parallel guiding means (69, 79) against adjusting stops (75, 76).

9. A device according to one of claims 1 to 8 characterised in that there is provided a common bearing housing which accommodates all bearing regions (no Fig.).

10. A device according to one of claims 1 to 8, characterised in that there are provided individual bearing housings (8, 9 ; 38, 39) which each comprise a bearing region (36, 66).

11. A device according to claim 10, characterised in that the individual bearing housings (8, 9 ; 38, 39) are arranged in the holding device so as to be longitudinally adjustable.

12. A device according to one of claims 1 to 11, characterised in that the bearing housings (8, 9) ire divided centrally, preferably horizontally, and that the housing halves are connected to each other so as to be tensioned and capable of springing open.

13. A device according to one of claims 1 to 11, characterised in that the bearing housings (38, 39) are arranged in their plane, i.e. perpendiculary to the axis of the hollow shaft (30), so as to be capable of being retracted individually from their entirety.

14. A device according to claim 13, characterised in that the bearing housings (38, 39) are arranged on parallel guiding means which may be retracted and which consist especially of two bars (47, 48).

15. A device according to claim 11 or 14, characterised in that the individual bearing housings (8, 9 ; 38, 39) or their parallel guiding means suitable for being retracted are adjustably arranged on parallel guiding means consisting especially of two to four bars (4, 7 ; 34, 37).

16. A device according to one of claims 1 to 15, characterised in that there are provided one or two end receiving bearings (19, 21 ; 51) with at least one longitudinal stop for receiving the hollow shaft (30) so as to be centred and arranged coaxially relative to the bearing regions (36, 66).

17. A device according to one of claims 1 to 16, characterised in that there is provided a mandrel holding device (25 ; 55) which is longitudinally movable in the direction of the end receiving bearings (19, 21 ; 51) and the bearing regions (36, 66) respectively and which is intended for moving a pressure agent mandrel (24 ; 54) into and out of the hollow shaft (30).

18. A device according to one of claims 1 to 17, characterised in that the mandrel holding device (25, 55) is arranged so as to be radially floating relative to the holding means for the elements and/or the holding means for the hollow shaft (30), especially via flexible guiding means in the mandrel holding device.

EP 0 295 281 B1

## Revendications

1. Appareil d'assemblage pour arbres à cames composés, comprenant un dispositif de maintien pour immobiliser ou tenir axialement des éléments individuels, tels que des cames, des bagues de paliers et des roues dentées droites ou coniques, de même qu'une sonde à fluide de pression pour élargir hydrauliquement un arbre creux par tronçons, de manière à relier les éléments et l'arbre creux entre eux par action de force, le dispositif de maintien comportant des disques de maintien individuels (10, 40) qui présentent chacun une ouverture centrale (16, 68) pour la réception d'un élément, ainsi qu'une portée extérieure qui est au moins partiellement circulaire et sert à la réception du disque de maintien (10) dans un logement (36, 66), caractérisé en ce que les disques de maintien (10, 40) sont chacun maintenus rotatifs dans un logement (36, 66) et des moyens de fixation (15, 67) sont prévus pour fixer la position angulaire des disques de maintien dans le logement.

2. Appareil selon la revendication 1, caractérisé en ce que les disques de maintien (10) sont divisés au milieu (Fig. 1).

3. Appareil selon la revendication 1, caractérisé en ce que les disques de maintien (40) présentent un dispositif d'ablocage (69-78) divisé au milieu (Fig. 2).

4. Appareil selon une des revendications 1 à 3, caractérisé en ce que les disques de maintien (10) sont chacun pourvus d'au moins un trou dans la portée extérieure pour fixer la position angulaire du disque dans le logement (66) au moyen d'une cheville de fixation (15).

5. Appareil selon une des revendications 1 à 3, caractérisé en ce que les disques de maintien (40) sont pourvus de dispositifs de serrage (67) répartis à la périphérie de la portée extérieure pour fixer la position angulaire du disque dans le logement (66).

6. Appareil selon la revendication 3, caractérisé en ce que le dispositif d'ablocage (69-78) comporte des mâchoires d'ablocage (71, 72) qui sont déplaçables et ajustables l'une par rapport à l'autre et sont pourvues de prismes récepteurs (82) et/ou de cuvettes réceptrices (81).

7. Appareil selon la revendication 6, caractérisé en ce que les prismes récepteurs (82) et/ou les cuvettes réceptrices (81) présentent des collets d'appui (79) pour des cames individuelles au cas où les disques de maintien (40) sont disposés horizontalement.

8. Appareil selon une des revendications 1 à 7, caractérisé en ce que les mâchoires d'ablocage (71, 72) sont déplaçables par coulissement, par voie pneumatique, sur des guides parallèles (69, 79) et jusque contre des butées d'ajustement (75, 76).

9. Appareil selon une des revendications 1 à 8, caractérisé en ce qu'il comprend un carter commun dans lequel sont formés tous les logements (sans figure).

10. Appareil selon une des revendications 1 à 8, caractérisé en ce qu'il comprend des carters ou réceptions individuels (8, 9 ; 38, 39) qui présentent chacun un logement (36 ; 66).

11. Appareil selon la revendication 10, caractérisé en ce que les différents carters (8, 9 ; 38, 39) sont montés coulissants dans le sens de la longueur dans le dispositif de maintien.

12. Appareil selon une des revendications 1 à 11, caractérisé en ce que les carters (8, 9) sont divisés au milieu — de préférence horizontalement — et les demi-carters sont reliés entre eux de manière qu'ils puissent être ouverts, en particulier par rabattement, et qu'ils puissent être serrés ensemble.

13. Appareil selon une des revendications 1 à 11, caractérisé en ce que les carters (38, 39) sont montés de manière qu'ils puissent être extraits individuellement de l'ensemble formé par eux et dans leur propre plan, c'est-à-dire suivant une direction perpendiculaire à l'axe de l'arbre creux (30).

14. Appareil selon la revendication 13, caractérisé en ce que les carters (38, 39) sont montés, de manière à pouvoir être extraits, sur un guidage parallèle ou système de glissières, constitué en particulier de deux barres (47, 48).

15. Appareil selon la revendication 11 ou 14, caractérisé en ce que les différents carters (8, 9 ; 38, 39) ou leur guidage parallèle, sont montés, pour pouvoir être extraits, sur un système de glissières constitué de deux à quatre barres (4, 7 ; 34, 37).

16. Appareil selon une des revendication 1 à 15, caractérisé en ce qu'il comprend un ou deux paliers récepteurs terminaux (19, 21 ; 51) avec au moins une butée longitudinale pour la réception centrée de l'arbre creux (30) dans une disposition coaxiale aux logements (36, 66).

17. Appareil selon une des revendications 1 à 16, caractérisé en ce qu'un porte-sonde (25 ; 55), servant à l'introduction d'une sonde à fluide de pression (24 ; 54) dans l'arbre creux (30), ainsi qu'à son extraction, est disposé mobile longitudinalement en direction des paliers récepteurs terminaux (19, 21 ; 51) ou des logements (36 ; 66).

18. Appareil selon une des revendications 1 à 17, caractérisé en ce que le porte-sonde (25 ; 55) est disposé radialement flottant par rapport au support pour les éléments et/ou par rapport au support pour l'arbre creux (30), en particulier à l'aide de moyens de guidage élastiques prévus dans le porte-sonde.

10

Fig. 1a

Fig. 1b

Fig. 1c

Fig.2a

Fig.2b

Fig. 2c